# EUROPÄISCHE PATENTSCHRIFT

(11) **EP 0 757 602 B1**
(45) Veröffentlichungstag und Bekanntmachung des Hinweises auf die Patenterteilung: **10.06.1998**
(21) Anmeldenummer: 95917266.9
(22) Anmeldetag: 27.04.1995
(51) Int. Cl.: B21K 1/76, B21K 1/04, B21H 1/06

(54) **VERFAHREN UND VORRICHTUNG ZUM KONTINUIERLICHEN, SPANLOSEN ABTRENNEN EINZELNER RINGE VON ROHRFÖRMIGEN WERKSTÜCKEN**
PROCESS AND DEVICE FOR THE CONTINUOUS, CHIPLESS SEPARATION OF INDIVIDUAL RINGS FROM TUBULAR WORKPIECES
PROCEDE ET DISPOSITIF PERMETTANT DE SEPARER EN CONTINU, SANS ENLEVEMENT DE COPEAUX, DES BAGUES DE PIECES TUBULAIRES

(30) Priorität: 29.04.1994 DE 4415091
(43) Veröffentlichungstag der Anmeldung: 12.02.1997
(73) Patentinhaber: MANNESMANN Aktiengesellschaft, 40213 Düsseldorf (DE)
(72) Erfinder: FELDMEIER, Fritz, 90475 Nürnberg (DE)
(74) Vertreter: Meissner, Peter E., Dipl.-Ing.
(86) Internationale Anmeldenummer: DE9500578
(87) Internationale Veröffentlichungsnummer: WO9529777

(56) Entgegenhaltungen:
- DE-A- 1 602 950
- DATABASE WPI Section Ch, Week 8120 Derwent Publications Ltd., London, GB; Class M21, AN 81-35863D & SU,A,761 100 ( MAIZELIS G S) , 8.September 1980
- DATABASE WPI Week 8008 Derwent Publications Ltd., London, GB; AN 80-B8097C & SU,A,667 301 ( MAIZELIS G S) , 15.Juni 1979

## Beschreibung

Die Erfindung betrifft ein Verfahren und eine Vorrichtung zum kontinuierlichen, spanlosen Abtrennen einzelner, untereinander gleicher Ringe von rohrförmigen Werkstücken gemäß dem Oberbegriff der Patentansprüche 1 und 6.

Ringförmige Bauteile sind in der Technik weit verbreitet. In der Wälzlagertechnik stellen sie mengenmäßig sogar einen ganz wesentlichen Anteil der Bauteile dar. Bekanntlich besteht jedes Wälzlager aus mindestens zwei ringförmigen Komponenten, dem Innenring und dem Außenring. Diese Ringe werden in großer Stückzahl beispielsweise aus einem rohrförmigen Halbzeug aus Wälzlagerstahl gewonnen. Das Teilen von Rohrmaterial in gleich große Ringe ist also besonders bei der Herstellung von Wälzlagern ein standardmäßiger Fertigungsschritt, dem bei dem ständig wachsenden Wettbewerb in der Wälzlagerbranche eine herausragende Bedeutung zukommt. Im Bestreben nach größerer Produktivität und günstigeren Herstellkosten kommt diesem Fertigungsschritt eine überragende Bedeutung zu, wobei vor allem beim spanenden Abtrennen das teurere Material erheblich zu den hohen Kosten beiträgt.

Ein gattungsbestimmendes Verfahren zum spanlosen Abtrennen einzelner, untereinander gleicher Ringe von rohrförmigen Werkstücken ist in der DE-OS 1602950 offenbart. Bei diesem Verfahren sind drei Schneidwalzen mit gewindeförmigen Schneiden um das zu bearbeitende Werkstück angeordnet. Diese Schneidwalzen sind gleichsinnig angetrieben und werden auf die Werkstückoberfläche gepreßt. Das rohrförmige Werkstück dreht sich gegensinnig zu den Schneidwalzen und wird dabei axial vorgeschoben. Die Drehstellung der drei Schneidwalzen untereinander ist so ausgerichtet, daß der Schneidkontakt zum zerteilenden Werkstück in einer exakt gemeinsamen Schneidebene stattfindet. Der Durchmesser der Schneidwalzen nimmt vom Anfang zum Ende hin zu und bildet dabei einen sich verengenden Kanal. Diese Vorrichtung ist nicht geeignet, um Wälzlagerringe mit hoher Genauigkeit herzustellen, da die Stirnflächenbereiche der abgetrennten Ringe stark abgerundet sind. Außerdem werden die Schneiden der Schneidwalzen schnell verschleißen, da der Wälzlagerstahl einen besonders hohen Verformungswiderstand aufweist und keine Maßnahmen zur Verringerung des Verformungswiderstandes angegeben sind.

Ein weiteres Verfahren zum Teilen von Rohrmaterial ist aus der DE-PS 10 13 487 bekannt. Bei diesem Verfahren läuft um das zu trennende Rohr ein Arbeitskopf um, der in einer Querschnittsebene umfangsmäßig angeordnete Werkzeughalter und darin lose gelagerte Schneidrollen aufweist. Die Schneidrollen sind mit Schneiden mit im wesentlichen radialen Flanken versehen, weiche mit dem zu trennenden Rohr beim Trennvorgang stirnseitig zur Anlage bringbar sind. Mit diesem Verfahren können nur diskontinuierlich einzelne Rohrabschnitte abgetrennt werden. Die Vorrichtung ist nicht geeignet in kurzen Taktzeiten von Rohrmaterial kontinuierlich untereinander gleiche Ringe abzutrennen.

Aufgabe der Erfindung ist es, ein Verfahren zum kontinuierlichen, spanlosen Abtrennen einzelner, untereinander gleicher Ringe von rohrförmigen Werkstücken anzugeben, mit dem vorzugsweise Ringe aus Wälzlagerstahl mit hoher Genauigkeit herstellbar sind, so daß entweder eine spanende Nachbearbeitung ganz entfallen oder der spanende Nachbearbeitungsaufwand gering ist und ein warmgewalztes Rohr ohne vorgeschaltete Wärmebehandlung direkt einsetzbar ist. Eine weitergehende Aufgabe besteht darin, daß auch bei der Verarbeitung von Wälzlagerstahl eine hohe Standzeit für das Werkzeug erreichbar ist.

Diese Aufgabe wird mit den im kennzeichnenden Teil des Anspruches 1 bzw. 6 angegebenen Merkmalen gelöst. Vorteilhafte Weiterbildungen sowie eine Vorrichtung zur Durchführung des Verfahrens sind Bestandteil von Unteransprüchen.

Im Unterschied zum bekannten Stand der Technik wird vor dem Abtrennprozeß das zu zerteilende rohrförmige Werkstück auf eine wesentlich den Umformwiderstand des eingesetzten Werkstoffes erniedrigende Temperatur erwärmt. Die Erwärmungstemperatur kann je nach Werkstoff Werte um 800° C und mehr annehmen. Die genaue Festlegung der Temperatur richtet sich zum einen nach dem Umform- und dem Zunderverhalten des eingesetzten Werkstoffes, den Auslegungsdaten der Trennvorrichtung, dem Werkstoff sowie der angestrebten Standzeit der Schneidwalzen.

Ein weiteres kennzeichnendes Merkmal des erfindungsgemäßen Verfahrens ist die Erzeugung von planparallelen und senkrecht zur Werkstückachse liegende Stirnflächen der abgetrennten Ringe. Dies ist von großem Vorteil insbesondere für die Herstellung von Wälzlagerringen. Je genauer die beim Abtrennen erzeugten Planflächen sind, umso geringer ist der erforderliche Nachbearbeitungsaufwand, z. B. in Form eines planparallelen Vor- oder Grobschleifens.

Die zentrierende Einlaufphase vor dem eigentlichen Abtrennprozeß hat sich als vorteilhaft herausgestellt, da es dadurch möglich ist, rohrförmige Werkstücke mit einer größeren Toleranzbreite zu verarbeiten. Somit ist es auch möglich, z. B. warmgewalzte Rohre direkt zu verarbeiten, ohne im Hinblick auf die Toleranzen zuvor eine Kaltumformung, beispielsweise durch Kaltpilgern oder Kaltziehen durchzuführen. Diese Einsatzmöglichkeit von warmgewalzten Rohren erhöht ganz wesentlich die Wirtschaftlichkeit des Verfahrens.

Zur Erzielung einer geometrisch möglichst genauen Kontur der abgetrennten Ringe ist die Eindringbewegung der Schneidwalzen in das Material des rohrförmigen Werkstückes an allen Punkten genau radial zur Achse des rohrförmigen Werkstückes gerichtet. Die Verformungskräfte sind Druckkräfte und wirken während des gesamten Abtrennvorganges immer genau senkrecht zur Werkstoffoberfäche. Die abzutrennenden Ringe werden, je weiter sie zur Endform des Abtrennprozesses bewegt werden, im Längsschnitt gesehen vollkommen von der Längskontur der Schneidwalzen ohne Unterbrechung der Berührungslinie zwischen Werkstück und Schneidwalzen während des gesamten Abtrennprozesses umschlossen. Die Ringabschnitte werden mit hohen Normalkräften, einmal Axialkräften auf die Stirnflächen und zum anderen Radialkräften auf die Mantelfläche beaufschlagt. Diese Normalkräfte sind reine Druckkräfte und erzeugen ausschließlich Druckspannungen in den Kontaktbereichen mit den Schneidwalzen, da zudem ein seitliches Wegfließen des Materials wegen der seitlichen Formbegrenzung durch die Schneidkantenflanken verhindert wird. Durch das dreiseitige Umschließen der Ringe während des Abtrennens erhalten die Ringe wegen der eindeutigen Kraftwirkung eine gute und konstante Konturgenauigkeit.

Ein weiteres Merkmal betrifft das Temperaturprofil im zu zerteilenden rohrförmigen Werkstück. Erfindungsgemäß wird an der äußeren Oberfläche des abzutrennenden Werkstückes eine höhere Temperatur als an der inneren Oberfläche erzeugt. In der kälteren Randschicht hat das Material demzufolge eine höhere Festigkeit. Dies verstärkt den Verformungswiderstand gegen das Zusammendrücken des rohrförmigen Werkstückes durch die von den Schneidwalzen erzeugten Radialkräfte und erhöht die Druckspannung im Material. Dieser Effekt wirkt sich positiv für das Verfahren aus, da er die bereits erwähnten Druckspannungen im Material weiter erhöht und damit die Form- und Maßgenauigkeit weiter verbessert. Eine etwas härtere Randschicht der Bohrungswandung vermindert zudem die Gratbildung und begünstigt damit das Abtrennen der Ringe. Eine zusätzliche Abschlageinrichtung, wie im Stand der Technik erwähnt, ist bei dem erfindungsgemäßen Verfahren deshalb nicht erforderlich. Der eingestellte Temperaturgradient erlaubt es zudem in den meisten Fällen auf eine Innenabstützung des abzutrennenden rohrförmigen Werkstückes zu verzichten, was die Konstruktion insgesamt wesentlich vereinfacht. Die Erwärmung des rohrförmigen Werkstückes erfolgt hauptsächlich induktiv, da über die Frequenz die Eindringtiefe der Erwärmung geregelt werden kann. Je nach Vorschub, Wanddicke sowie Werkstoff kann es aber erforderlich sein, eine Vorerwärmung z. B. mittels eines Muffelofens vorzusehen.

Die vorgeschlagene Erwärmung des rohrförmigen Werkstückes vor dem Abtrennprozeß führt aber zu einer Aufheizung des Arbeitsraumes, da die Oberflächentemperatur des Werkstückes auf die Schneidwalzen übertragen wird und außerdem der verlustbehaftete Abtrennprozeß selbst zu einer Erhöhung der Werkstücktemperatur führt. Um die Temperatur der Schneidwalzen unterhalb eines vorgegebenen Wertes zu halten, der die Festigkeitseigenschaften und die Standzeit des Schneidwalzenwerkstoffes nicht vermindert wird deshalb vorgeschlagen, die Schneidwalzen von innen her zu kühlen. Außerdem wird zur Verminderung der Reibungskräfte auf die Außenoberfläche der Schneidwalzen sowie auf das abzutrennende Werkstück ein kombiniertes Kühl- und Schmiermittel aufgegeben.

Ein weiterer Vorteil beim Abtrennen eines zuvor erwärmten rohrförmigen Werkstückes ist, daß die Härte des Ausgangsmaterials keinen Einfluß hat und beispielsweise somit ein gewalztes Rohr direkt vom Kühlbett nach dem Walzen verwendet werden kann. Die bei Wälzlagerstahl ansonsten erforderliche Grundglühung braucht somit erst am abgetrennten Einzelring durchgeführt zu werden, was den Ring in einen eigenspannungsfreien Zustand versetzt. Solche Ringe weisen nach der Fertigbearbeitung im weichen Zustand nach dem Härten und Anlassen einen geringeren Härteverzug auf. Dem an das Härten anschließende Schleifen können somit formgenauere Ringe mit verringertem Schleifaufmaß zugeführt werden. Dies steigert die Qualität des Endproduktes und verkürzt die Schleifzeiten an den Ringen.

Das erfindungsgemäße Verfahren ist anwendbar für das Abtrennen untereinander gleicher Ringe von rohrförmigen Werkstücken, aber auch für das gleichzeitige Aufbringen eines Profils auf die Ringe. Beispielsweise kann für den Innenring eines Wälzlagers die Laufrille mitangeformt werden. Ein anderes Beispiel wäre die Anformung einer Kegelfläche im Mantelbereich des Ringes. Zu diesem Zweck sind die Schneidwalzen zwischen den Schneiden mit einer entsprechenden Negativform versehen, die von Null beginnend von Gang zu Gang kontinuierlich bis zu ihrer Endform zunimmt.

Die erfindungsgemäße Vorrichtung besteht in bekannter Weise aus drei um das zu bearbeitende rohrförmige Werkstück angeordnete, gleichsinnig angetriebene Schneidwalzen mit gewindeförmigen Schneiden. Im Längsschnitt gesehen sind die Schneiden mit im wesentlich radial verlaufenden Flanken versehen und die Breite nimmt vom Einlauf zum Auslauf hin kontinuierlich zu. Diese Breitenzunahme der Schneide ist erforderlich, damit trotz zunehmender radialer Erstreckung der Schneiden ein bestimmtes Breiten-/Höhenverhältnis erhalten bleibt. Anderenfalls besteht die Gefahr des Wegbrechens der Schneide, da eine zu schmale Schneide keinen zur Aufnahme der Kräfte ausreichenden Querschnitt aufweist. Die Kontur im Grund zwischen den Schneiden ist vorzugsweise parallel zur Walzachse. Jede Schneidwalze weist eine von Anfang zum Ende hin kontinuierliche Zunahme des Durchmessers auf und bildet, wie bereits schon erwähnt, einen sich verengenden Kanal.

Die Drehbewegung der einzelnen Schneidwalzen untereinander muß genau synchronisiert sein. Sie müssen zumindestens einmal mit der gleichen Umfangsgeschwindigkeit angetrieben werden, was am einfachsten dadurch zu realisieren ist, daß die Wellen aller drei Schneidwalzen formschlüssig miteinander gekoppelt sind und von einer einzigen gemeinsamen Antriebswelle bewegt werden. Wie zuvor beim Verfahren schon erläutert, ist einlaufseitig ein einen Trichter bildender Einlaufteil vorgesehen. Dieser Einlaufteil kann integraler Bestandteil der Schneidwalzen selbst sein z. B. in Form einer kurz gehaltenen Schlupffase oder aber auch kegelig sich über mehrere Gänge hinweg erstrecken. Alternativ ist es auch möglich vor der Schneidwalze einen eine Schlupffase aufweisenden ringförmigen Abschnitt anzuordnen. Der Vorteil der Anordnung eines Einlaufteiles ist darin zu sehen, daß die Toleranzschwankungen des einlaufenden rohrförmigen Werkstückes besser überbrückt werden können und auch gewalztes sowie ungerichtetes Material unmittelbar verarbeitet werden kann. Anstelle der sonst üblichen Präzisionsrohre können ohne Qualitätseinbußen des Endproduktes weniger kostspielige Halbzeuge eingesetzt werden, wodurch die Wirtschaftlichkeit deutlich erhöht wird.

Die axiale Vorschubbewegung des rohrförmigen Werkstückes wird durch das Abwälzen der radialen Flanken der auf das Werkstück radial gepreßten Schneidwalzen erzwungen. Dieser kinematische Zwang ist aber nicht sofort bei Einführung des rohrförmigen Werkstückes in die Werkzeuganordnung gegeben. Aus diesem Grunde ist vor der Walzenanordnung einlaufseitig eine lösbare Vorschubeinrichtung vorgesehen, die auf das rohrförmige Werkstück wirkt. Dieser Zwangsvorschub, der gleichzeitig das rohrförmige Werkstück in eine gegensinnige Rotation zu den Schneidwalzen versetzt, wirkt in Achsrichtung und ist in seiner Bewegung genau auf die Drehzahl der Schneidwalzen und der Steigung der Schneiden abgestimmt und mindestens eine Schneidwalzenlänge wirksam. Damit ist sichergestellt, daß nach der Einführung ein störungsfreier axialer Weitertransport des Materials des rohrförmigen Werkstückes durch die Vorrichtung, allein aus der Drehung der Schneidwalzen und durch den axialen Anpreßdruck der Schneidflanken, aufrechterhalten wird.

Die Geometrie des Schneidganges besteht aus der auf den abzutrennenden Ring zu übertragenden Negativform des äußeren Ringprofils und der seitlichen Begrenzung mit den Flanken der Schneiden für den Trennvorgang. Das Ringprofil ist auf dem Grund zwischen den Schneiden abgebildet und vorzugsweise achsparallel zur Schneidachsenwalze ausgerichtet. Die Schneidengeometrie besteht aus zwei Abschnitten. Der Schneidenkopf ist an seinem größten Durchmesser in bekannter Weise spitz bzw. schneidenförmig ausgebildet, um leicht in das zu trennende Material eindringen zu können. Dieser Kopf wird relativ kurz gehalten, bezogen auf die gesamte Schneidenlänge. Der Schneidenfuß hat nahezu parallele radiale Flanken oder Flanken, die nur gering plus ≤ 5° dachförmig zur Radialebene der Schneidwalze geneigt sind. Die Flanken des Schneidenfußes begrenzen seitlich die Kontur des Schneidganges. Ob die Flanken nahezu radial stehen oder minimal vom Grund ausgehend, nach außen geneigt angeordnet sind, d. h. den Gang nach außen erweitern, hängt ab vom Durchmesser der Schneidwalzen zum Durchmesser des rohrförmigen Werkstückes. Bei einem Verhältnis ≥ 3 müssen die Schneidenflanken leicht nach außen geneigt sein. Damit wird erreicht, daß sich die Schneide zwangsfrei, ohne Verkeilwirkung, in der Schneidrille abwälzen kann.

Im Sinne einer günstigen Verteilung der entstehenden Kräfte, wird das zuvor beschriebene Durchmesserverhältnis vorzugsweise < 3 gehalten, so daß der Schneidenfuß mit nahezu exakt radialen Flanken ausgelegt ist. So werden für einen Durchmesser des rohrförmigen Werkstückes von 40 mm Schneidwalzen mit einem Durchmesser von 100 mm verwendet. Damit ist sichergestellt, daß durch das relativ schräg gerichtete Anlaufen der Schneide gegen die Schneidrille im Kontaktbereich der Schneidwalzen zum abzutrennenden Material sehr hohe Axialkräfte, aber keine Radialkräfte entstehen. Der Anteil der Tangentialkräfte, die zusammen mit den Axialkräften die Scherkräfte des Trennprozesses darstellen, sind sehr klein und stören den Ablauf des Verfahrens nicht.

Für die Erwärmung des rohrförmigen Werkstückes wird vorzugsweise an der Einlaufseite eine Induktionsspule angeordnet, durch die das rohrförmige Werkstück geführt wird. In Abhängigkeit von der Frequenz und der Durchlaufzeit werden mehr oberflächennahe oder auch weiter entfernt liegende Bereiche des Materials aufgeheizt. Bei geeigneter auf die Dicke des zu trennenden Materials abgestimmter Frequenz und Leistung der Induktionserwärmung kann erreicht werden, daß zur Bohrung hin die Temperatur niedriger ist und demzufolge das Material in dieser kälteren Randschicht eine höhere Festigkeit behält.

Die Kontur der Schneidwalzen ist der geforderten Außenkontur der Ringe angepaßt. Üblicherweise ist der Grund der Kontur eine Gerade zwischen den Schneidkantengängen mit einem über fast alle Gänge konstanten Durchmesser. Alternativ kann es aber auch vorteilhaft sein, den Durchmesser des Konturgrundes im eigentlichen Arbeitsbereich leicht zunehmen zu lassen. Diese leichte Zunahme hat den Zweck, den Radialdruck zu verstärken. Im Auslaufbereich wird man den Durchmesser des Konturgrundes konstant lassen oder sogar leicht zurücknehmen. Dies hat den Sinn, daß der abgetrennte Ring einen Durchmesser aufweist, der der lichten Weite der Schneidwalzenanordnung im Auslaufbereich entspricht. Anderenfalls würde bei zu starkem Radialdruck der Ring aufspringen, so daß das Streuband der Durchmesserschwankungen sehr groß wäre. Im gleichen Sinne wirkend wird auch vorgeschlagen, dem letzten Schneidgang auf der Schneidwalze einen Kalibrierabschnitt nachzuschalten. Dieser kann ein integraler Bestandteil der Schneidwalzen oder als separater ringförmiger Abschnitt ausgebildet sein. Dieser Kalibrierabschnitt hat den Vorteil, daß unabhängig vom Trennvorgang ein möglichst kreisrunder, nur geringe Durchmesserschwankungen aufweisender Ring erzeugt wird. Auf der Einlaufseite ist, wie schon zuvor erwähnt, ein Einlaufabschnitt vorgesehen, der entweder als eine kurze Schlupffase oder als ein Abschnitt ausgebildet ist, in dem der Durchmesser des Konturgrundes zur Einlaufseite hin stetig zunimmt. Dieser Einlaufteil ist vorteilhaft, um auch Material mit großen Außendurchmesserschwankungen ohne Probleme verarbeiten zu können.

Prinzipiell kann das Gewinde der Schneidwalzen sowohl ein- als auch mehrgängig ausgebildet sein. Bei der eingängigen Ausführung handelt es sich um eine bevorzugte Ausführungsform, da in diesem Falle die Gewindesteigung minimiert wird und damit die zwischen Schneidwalze und Material wirkende axiale Vorschubkraft am effektivsten übertragen werden kann.

Bei der Verwendung von drei Schneidwalzen ist die radiale Lage des Werkstückes eindeutig festgelegt, so daß sich weitere Führungselemente erübrigen. Der Durchmesser der Schneidwalzen soll einerseits ein bestimmtes Verhältnis zum Durchmesser des zu teilenden Werkstückes aufweisen, andererseits aber möglichst groß bemessen sein. Die Grenzen ergeben sich dadurch, daß nicht beliebig große Schneidwalzen verwendbar sind, da sie sich in diesem Falle untereinander stören würden.

Das erfindungsgemäße Ringherstellungsverfahren ist besonders geeignet bei Ringaußendurchmesser von 16 bis 80 mm und Wanddicken von etwa 8 bis 15 % des Außendurchmessers. Das günstigste Verhältnis Ringbreite zu Ringdurchmesser beträgt 0,2 bis 0,5. Angewendet wird dies Verfahren vorteilhaft bei der Herstellung von Ringen, bei denen die Materialkosten einen wesentlichen Anteil der Ringkosten ausmachen, weil keine Materialverluste durch Zerspanung entstehen und für die nachfolgenden Bearbeitungsgänge genauere kostensparendere Ringe bereitgestellt werden. Bevorzugte Anwendung ist die spanlose Verarbeitung von auf etwa 800° C erwärmten Wälzlagerstahlrohr zu Ringen. Zur Durchführung des Verfahrens sind höhere Temperaturen an der Oberfläche des Werkstückes erforderlich, die sich auf die Schneidwalzen übertragen und den Arbeitsraum erheblich aufheizen. Durch Kühlkanäle in den Schneidwalzen wird Medium mit hohem Wärmeaufnahmevermögen im Kreislauf durch einen außerhalb der Trennvorrichtung angeordneten Wärmetauscher gepumpt. Die Schneidwalzen bestehen aus einem inneren Teil mit den eingearbeiteten Kühlkanälen und einer äußeren Hülse, in die das Schneidprofil eingearbeitet ist. Die Hülse mit dem Schneidprofil besteht aus hochfestem, temperaturunempfindlichen Stoff, z. B. Sintermaterialien, oder einem geeigneten Grundwerkstoff, der im Kontaktbereich mit dem zu trennenden Gut mit temperaturbeständigen, harten Material beschichtet ist. Das Grundteil und die profilierte Hülse sind dicht und verdrehsicher zur Schneidwalze verbunden. In der Zeichnung werden das erfindungsgemäße Verfahren sowie die Vorrichtung näher erläutert.

Es zeigen:
- Figur 1: eine Gesamtanordnung der wesentlichen Bauteile der erfindungsgemäßen Vorrichtung
- Figur 2: eine Schneidwalze mit einer darauf aufgebrachten gewindeförmigen Schneide, wobei der Durchmesser der zylindrischen Außenkontur der Schneidwalze sowie der Durchmesser der Schneide stetig zunehmen
- Figur 3: eine Schneidwalze mit Außenkontur mit gleichbleibendem Durchmesser und zunehmendem Schneidendurchmesser
- Figur 4: einen Querschnitt des Schneidprofils
- Figur 4a: eine Draufsicht des Schneidprofils in Verbindung mit dem zu trennenden Rohr
- Figur 5: eine Schneidwalze mit kontinuierlich wachsender Steigung des Trennprofils
- Figur 6: einen Längsschnitt durch eine Schneidwalze mit Innenkühlung

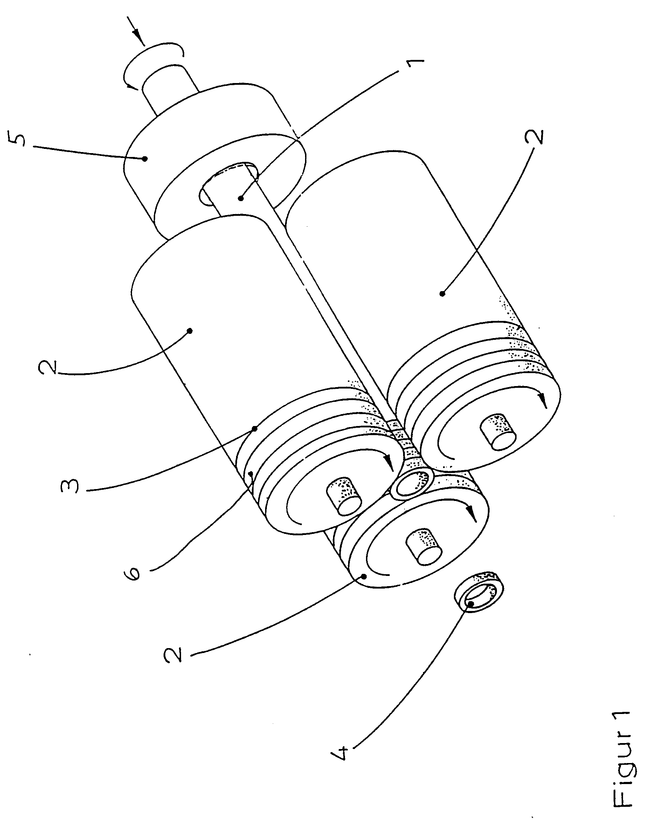

Figur 1 zeigt das Prinzip der Gesamtanordnung der erfindungsgemäßen Vorrichtung mit ihren wesentlichen Bauteilen. Das zu teilende Rohr 1 wird einer axialen Vorschubbewegung unterworfen, in der Induktionsspule 5 erwärmt und zwischen die drei Schneidwalzen 2 eingeführt. Die drei Schneidwalzen 2 sind untereinander achsparallel und parallel zur Richtung der Vorschubbewegung des zu teilenden Rohres 1 angeordnet, wobei der Abstand der Schneidwalzen 2 zum zu teilenden Rohr 1 so bemessen ist, daß die Schneiden 3 der Walzen 2 radial in die Wandung des Rohres 1 eindringen. Die drei Schneidwalzen 2 sind in Form eines gleichseitigen Dreiecks um das zu teilende Rohr 1 herum angeordnet. Die drei Schneidwalzen 2 werden durch einen hier nicht dargestellten Antriebsmechanismus einer gleichmäßigen, synchronen Drehbewegung unterworfen. Diese synchrone Drehbewegung ist mit der axialen Vorschubbewegung des zu teilenden Rohres 1 kinematisch so gekoppelt, daß die auf den Schneidwalzen 2 aufgebrachten Schneiden 3 genau immer in einer gemeinsamen Ebene in das zu teilende Rohr 1 eindringen. Die gleichsinnige Drehbewegung der drei Schneidwalzen 2 sowie die gegensinnige Drehbewegung und die Vorschubbewegung des Rohres 1 sind durch Pfeile kenntlich gemacht.

Wie bereits zuvor erwähnt, vollzieht das zu teilende Rohr 1 zusätzlich noch eine Drehung um die eigene Achse, die durch die Abrollbewegung der Schneidwalzen 2 auf dem zu teilenden Rohr 1 hervorgerufen wird und die dazu führt, daß tatsächlich alle Bereiche am Umfang des zu teilenden Rohres 1 mit den Schneidwalzen 2 in Kontakt kommen. Die Schneiden 3 weisen keine konstante Erhebung auf, sondern sind auf der Seite, von wo aus das zu teilende Rohr 1 eingeführt wird, zunächst ganz flach, so daß sie in diesem Bereich kaum in das zu teilende Rohr 1 eindringen. Zum gegenüberliegenden Ende hin gewinnen die Schneiden 3 immer mehr an Höhe, so daß sie immer tiefer in die Wandung des zu teilenden Rohres 1 eindringen. Im Zuge des so aufgezwungenen Bewegungsablaufes wird das zu teilende Rohr 1 schließlich am anderen axialen Ende der Schneidwalzen 2 in einzelne diskrete Ringe 4 aufgetrennt.

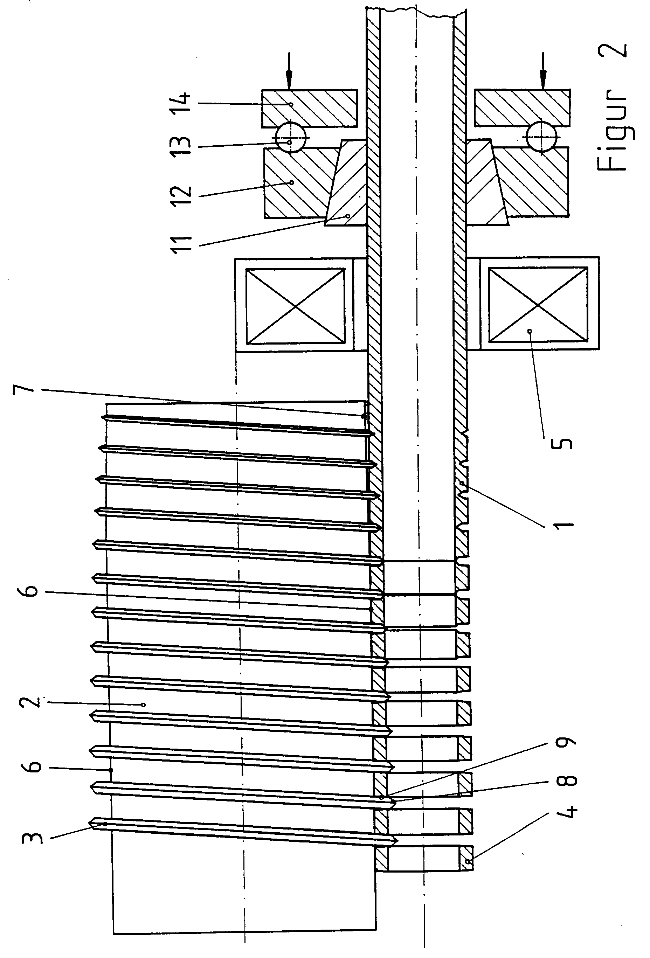

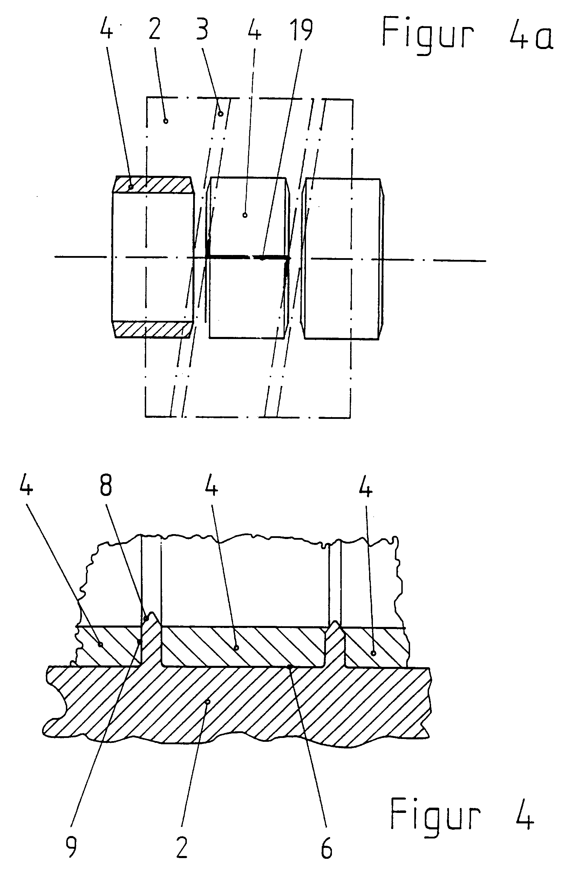

Der letztgenannte Sachverhalt wird besonders durch die Figur 2 detailliert erläutert. Diese Figur zeigt das Zusammenspiel zwischen dem zu teilenden Rohr 1 mit einer einzigen Schneidwalze 2. Die anderen, hier nicht dargestellten Schneidwalzen 2 sind in Form eines Dreiecks um das zu teilende Rohr 1 herum angeordnet. Die Schneide 3 ist an dem Ende der Schneidwalze 2, von wo aus das zu teilende Rohr 1 eingeführt wird, nur sehr schwach ausgebildet. An diesem Ende geht es vor allen Dingen darum, daß zu teilende Rohr 1 sicher zu fassen, die Drehbewegung des Rohres 1 zu unterstützen und dessen kinematisch einwandfreie Axialbewegung sicherzustellen. Die Schneide 3 ist so ausgebildet, daß sowohl der Durchmesser als auch die Breite zum gegenüberliegenden Ende hin stetig ansteigen. In bestimmten Fällen kann es auch vorteilhaft sein, daß im eigentlichen Arbeitsbereich der Durchmesser des Konturgrundes 6 leicht zunimmt, im Auslaufbereich aber konstant bleibt, möglicherweise sogar etwas zurückgeht. Dadurch soll ein elastisches Aufspringen der Ringe nach Verlassen der Schneidwalzen 2 verhindert werden. Um auch Rohre 1 mit größeren Schwankungen im Außendurchmesser sicher erfassen zu können, weist die Schneidwalze 2 einen Einlaufteil 7 auf. In diesem Abschnitt ist der Durchmesser des Konturgrundes 6 stärker reduziert, so daß ein trichterförmiger Bereich entsteht. Der Konturgrund 6 liegt im eigentlichen Abtrennabschnitt der Schneidwalze 2 lückenlos an der äußeren Wandung des Rohres 1 an und die Schneide 3 dringt immer mehr in das zu teilende Rohr 1 ein, welches schließlich in diskrete Ringe 4 zerlegt wird, die ihrerseits untereinander gleich groß sind. Die Schneide 3 ist so ausgebildet, daß sie sowohl in das Material eindringt, als auch die Stirnflächen des abzutrennenden Ringes 4 möglichst eben zurückläßt. Aus diesem Grunde besteht die Schneide 3, wie in Figur 4 dargestellt, vorteilhaft aus zwei Abschnitten. Der Schneidenkopf 8 ist spitz ausgeformt, so daß er in das Material eindringt. Der sich daran anschließende Schneidenfuß ist hingegen so ausgebildet, daß die Flanken weitgehend senkrecht zur Drehachse der Schneidwalze 2 ausgerichtet sind, so daß die dadurch geformte Stirnfläche der abgetrennten Ringe 4 weitgehend plan ist. An dem Ende, wo das zu teilende Rohr 1 in die Vorrichtung eingeführt wird, besteht die Schneide 3 ausschließlich aus dem allmählich höher werdenden spitzförmigen Schneidenkopf 8, wo hingegen am gegenüberliegenden Ende der Vorrichtung die Schneide 3 überwiegend aus dem Schneidenfuß 9 besteht.

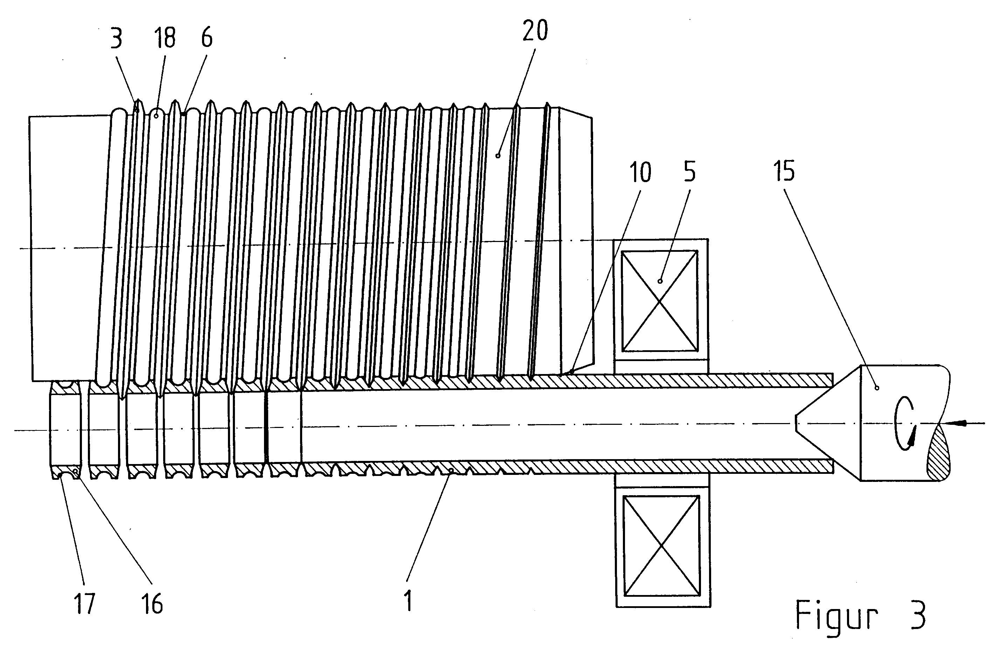

Das zu teilende Rohr 1 ist in der Darstellung von Figur 2 vor dem Einlaufen in die Trennvorrichtung von einer spannzangenartigen Haltevorrichtung umgeben, die aus einem Innenteil 11 und einem Außenteil 12 besteht, die nach Art eines Spannsatzes durch eine axiale Betätigungskraft so zusammengepreßt werden können, daß sie gemeinsam kraftschlüssig mit dem zu teilenden Rohr 1 verbunden sind. Da sie in diesem Zustand nicht nur der Axialbewegung, sondern auch der Drehbewegung des zu teilenden Rohres 1 folgen, muß die Drehbewegung durch eine Axiallagerung, hier bestehend aus dem Wälzelement 13 und einem zweiten Axiallagerring 14 entkoppelt werden. Dem Axiallagerring 14 wird durch eine entsprechende Kopplung mit der Drehbewegung der Schneidwalzen 2 die kinematisch korrekte axiale Vorschubgeschwindigkeit aufgezwungen. Diese Hilfestellung ist beim Einführen eines neuen Rohres 1 in die Vorrichtung auf jeden Fall notwendig. Bei fortschreitendem Trennvorgang werden das Innenteil 11 und das Außenteil 12 der spannzangenartigen Haltevorrichtung durch Wegnahme der Betätigungskraft voneinander gelöst, in ihre Ausgangsposition zurückgefahren und erst dann wieder in Bewegung gesetzt, wenn ein neues Rohr eingeführt wird. Die Haltevorrichtung ist in der Darstellung von Figur 2 mit Spannzange und axialem Wälzlager dargestellt. Tatsächlich kommen auch andere konstruktive Ausführungen in Frage. In Figur 3 ist diese Vorschubeinrichtung als eine rotierende Zentrierspitze 15, die sich in der Rohrbohrung zentriert und Mitnehmerschneiden bekannter Art hat, dargestellt.

Im Unterschied zu Figur 2 weist die Schneidwalze 20 (Fig. 3) einen Konturgrund 6 auf, dessen Durchmesser über die Schneidwalzenlänge konstant ist. Der Durchmesser der Schneide 3 nimmt aber von einem Ende zum anderen Ende in bekannter Weise stetig zu. Zur Einführung des zu teilenden Rohres 1 und zur Zentrierung weist die Schneidwalze 20 eine Schlupffase 10 auf. Zur Anformung beispielsweise einer Laufrille 17 im abgetrennten Ring 16 weist der Konturgrund 6 eine entsprechende Negativform 18 auf. Diese Negativform 18 nimmt einlaufseitig bei Null beginnend kontinuierlich zu, bis die gewünschte Endform erreicht ist. Im Unterschied zum reinen Abtrennprozeß nimmt die Breite des Konturgrundes 6 stetig bis zur Endform zu, da durch die Negativform 18 eine Materialverdrängung stattfindet. Auf NC-gesteuerten Maschinen lassen sich solche Schneidwalzen 2,20 mit stetig veränderlichen, gewindeförmigen Schneid- bzw. Schneid- und Profilverlauf herstellen.

Fig. 4a zeigt eine Draufsicht des Schneidprofils in Verbindung mit dem zu trennenden Rohr bzw. den abgetrennten Ringen 4. Diese Darstellung soll den fortwährenden Kontakt des Ringabschnittes mit der Schneidwalze 2 verdeutlichen. Für den mittleren Ring 4 ist dieser Kontakt als Kontaktlinie 19 eingezeichnet.

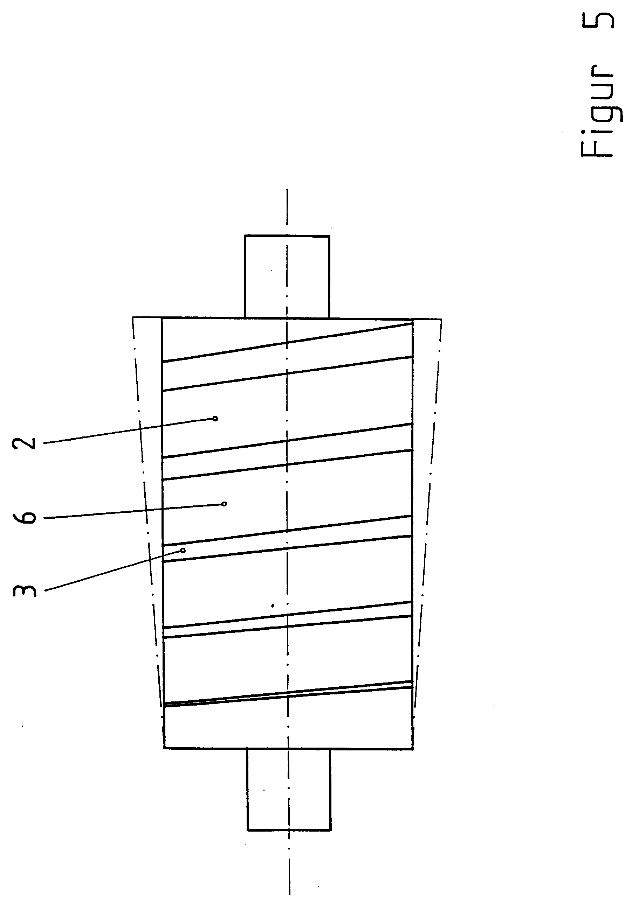

Figur 5 zeigt wesentlich die Schneidwalze 2 mit der stetig steigenden Gewindesteigung der Schneide 3. Im Falle des reinen Abtrennens mit geringer Materialverdrängung wird die Breite des Konturgrundes 6 konstant gehalten, wobei diese Breite der gewünschten Breite des abzutrennenden Ringes entspricht. Da, wie eingangs schon erwähnt, aus Festigkeits- und Stabilitätsgründen die Breite der Schneide 3 mit zunehmender radialer Erstreckung ebenfalls zunehmen muß, ist zur Erfüllung der Bedingung - konstante Breite des Konturgrundes 6 - erforderlich, die Gewindesteigung in dem Maße anwachsen zu lassen, um die zunehmende Breite der Schneide 3 gerade zu kompensieren. Im Falle einer zusätzlichen Profilierung des abzutrennenden Ringes mit großer Materialverdrängung ist es notwendig, die Breite des Konturgrundes 6 kontinuierlich anwachsen zu lassen, mit Ausnahme des Auslaufbereiches, in dem der Grad der Materialverdrängung gegen Null geht und der Ring nur noch kalibriert wird. Die strichpunktierten Linien in Figur 5 sollen andeuten, daß unabhängig von der Wahl der Breite des Konturgrundes 6 die radiale Erstreckung der Schneide 3 vom Einlauf zum Auslauf hin kontinuierlich zunimmt, damit im Zusammenwirken mit den zwei anderen hier nicht dargestellten Schneidwalzen 2 ein sich verengender Kanal gebildet wird.

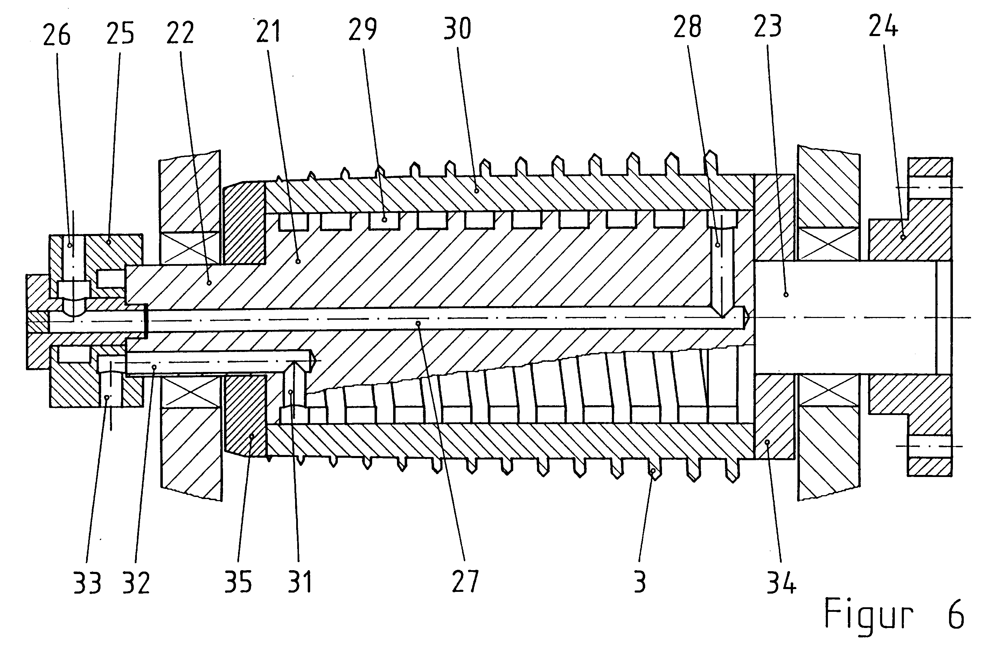

Figur 6 zeigt eine Schneidwalze, die aus einem inneren Teil der Welle 21 und dem Schneidwerkzeug 30 mit Schneiden 3 besteht. Die Welle 21 hat an beiden Enden zylindrische, zapfenförmige Fortsätze 22,23, die auf ihren Außendurchmessern die Lagerungen der Schneidwalzen in den Walzengestellen aufnehmen. An der Ringauslaufseite 23 ist das Kupplungsteil 24 befestigt, das die starre Verbindung zum synchronen Antrieb der Schneidwalzen herstellt und an der Einlaufseite der Schneidwalze ist auf dem Wellenzapfen 22 eine drehbare Kupplung 25 befestigt, die über geeignet angeordnete Kanäle und Bohrungen den Kühlmittelkreislauf in der rotierenden Schneidwalze gewährleistet. Der Kühlmittelzulauf 26 ist mit einer hier nicht dargestellten Hochdruckpumpe verbunden, die das Kühlmittel durch die Zentrumsbohrung 27 in der Welle 21 durch eine oder mehrere Radialbohrungen 28 zum wendelförmig am Außendurchmesser in die Welle 21 eingearbeiteten Kühlkanal 29 pumpt. Das Kühlmittel strömt am Kühlkanal, der nach außen durch das Schneidwerkzeug 30 verschlossen ist, entgegen der Vorschubrichtung des Werkstückes zu den ein oder mehreren radialen Ablaufbohrungen 31. Diese Ablaufbohrungen 31 sind mittels einer oder mehrerer Bohrungen 32 durch den Wellenzapfen 22 mit dem Ablauf 33 verbunden. Von hier wird das aufgeheizte Kühlmedium durch einen Wärmetauscher zurück zur Kühlmittelpumpe geleitet. Das Schneidwerkzeug 30 ist durch Aufschrumpfen auf die Welle 21 dicht und verdrehsicher mit dieser verbunden.

An das Schneidwerkzeug 30 schließt sich in axialer Verlängerung ein ringförmiger Kalibrierabschnitt 34 an, der die abgetrennten Ringe nochmals nachkalibriert. Der axial an der Einlaufseite an das Schneidwerkzeug 30 anschließende ringförmige Abschnitt 35 ist mit einer Fase zum leichteren Zentrieren des neu in die Trennvorrichtung eingeführten Rohrwerkstückes versehen.

## Patentansprüche

1. Verfahren zum kontinuierlichen, spanlosen Abtrennen einzelner untereinander gleicher Ringe (4) von rohrförmigen Werkstücken (1) mittels dreier gleichsinnig angetriebener und auf die Oberfläche des rohrförmigen Werkstückes gepreßter und dabei abrollender Schneidwalzen (2) mit gewindeförmigen Schneiden, wobei die Drehstellung der drei Schneidwalzen (2) untereinander so ausgerichtet ist, daß der Schneidkontakt zum zu teilenden Werkstück in einer exakt gemeinsamen Schneidebene stattfindet und der Durchmesser der Schneidwalzen (2) vom Anfang zum Ende hin zunimmt und dabei einen sich verengenden Kanal bildet, wobei das rohrförmige Werkstück gegensinnig zu den Schneidwalzen gedreht und axial vorgeschoben wird,
dadurch gekennzeichnet,
daß nach einer zentrierenden Einlaufphase der abzutrennende Abschnitt des rohrförmigen Werkstückes im Längsschnitt gesehen vollkommen von der Längskontur der Schneidwalzen ohne Unterbrechung der Berührungslinie zwischen Werkstück (1) und Schneidwalzen (2) während des gesamten Abtrennprozesses umschlossen und mit hohen Normalkräften, einmal Axialkräften auf die Stirnflächen und zum anderen Radialkräften auf die Mantelfläche beaufschlagt wird und planparallel und senkrecht zur Werkstückachse liegende Stirnflächen der Ringe (4) erzeugt werden und daß vor dem Abtrennprozeß das rohrförmige Werkstück auf eine wesentlich den Umformwiderstand des eingesetzten Werkstoffes erniedrigende Temperatur erwärmt wird, wobei an der äußeren Oberfläche eine höhere Temperatur als an der inneren Oberfläche des rohrförmigen Werkstückes erzeugt wird.

2. Verfahren nach Anspruch 1,
dadurch gekennzeichnet,
daß unterstützend zur Einführung des rohrförmigen Werkstückes (1) in die Schneidwalzenanordnung dieses mit einer in gleicher Richtung wirkenden Vorschubkraft beaufschlagt wird, wobei diese kinematisch mit der Drehbewegung des Schneidwerkzeuges gekoppelt und mindestens eine Schneidwalzenlänge wirksam ist.

3. Verfahren nach den Ansprüchen 1 und 2,
dadurch gekennzeichnet,
daß die Erwärmung im wesentlichen induktiv erfolgt.

4. Verfahren nach den Ansprüchen 1 bis 3,
dadurch gekennzeichnet,
daß die Ringe (4) während des Abtrennens gleichzeitig profiliert werden.

5. Verfahren nach den Ansprüchen 1 bis 4,
dadurch gekennzeichnet,
daß während des Abtrennens und Profilierens das Werkzeug von innen gekühlt und Werkzeug sowie abzutrennendes Werkstück von außen mit einer kombinierten Kühl- und Schmierflüssigkeit beaufschlagt werden.

6. Vorrichtung zur Durchführung des Verfahrens nach Anspruch 1 mit drei um das zu bearbeitende rohrförmige Werkstück (1) angeordneter gleichsinnig angetriebener Schneidwalzen (2,20) mit gewindeförmigen Schneiden, die im Längsschnitt gesehen mit im wesentlichen radial verlaufenden Flanken versehen sind und deren Breite vom Einlauf zum Auslauf hin kontinuierlich zunimmt und der Konturengrund (6) zwischen den Schneiden der Schneidwalze im wesentlichen parallel zur Walzenachse ist und jede Schneidwalze vom Anfang zum Ende eine kontinuierliche Zunahme des Durchmessers aufweist,
dadurch gekennzeichnet,
daß die Wellen aller drei in Form eines gleichseitigen Dreiecks um das zu teilende Werkstück (1) herum angeordnete Schneidwalzen (2,20) formschlüssig miteinander gekoppelt sind und die Schneiden (3) einen spitz ausgeformten Schneidenkopf (8) und einen Schneidenfuß (9) mit im wesentlichen senkrecht zur jeweiligen Walzenachse gerichtete Flanken aufweisen und einlaufseitig ein einen Trichter bildender Einlaufteil (7,10,35) vorgesehen ist und der Konturgrund (6) zwischen den Schneiden (3) an der Mantelfläche des rohrförmigen Werkstückes (1) im wesentlichen abstandsgleich zur Werkstückachse zur Anlage kommt und eine Erwärmungseinrichtung (5) mit Temperaturregelung einlaufseitig vor der Schneidwalzenanordnung angeordnet ist.

7. Vorrichtung nach Anspruch 6,
dadurch gekennzeichnet,
daß die Flanken des Schneidenfußes (9) bei einem Verhältnis des Durchmessers der Schneidwalze (2,20) zum rohrförmigen Werkstück (1) gleich < 3 nahezu senkrecht zur jeweiligen Walzachse und bei einem Verhältnis ≥ 3 maximal bis plus ≤ 5° nach außen hin zur Radialebene der Schneidwalzen (2,20) geneigt sind.

8. Vorrichtung nach Anspruch 6,
dadurch gekennzeichnet,
daß die Schneidwalze (2,20) einen Einlaufteil (7,10) aufweist.

9. Vorrichtung nach Anspruch 6,
dadurch gekennzeichnet,
daß der Schneidwalze ein eine Schlupffase aufweisender ringförmige Abschnitt (35) vorgeschaltet ist.

10. Vorrichtung nach Anspruch 6,
dadurch gekennzeichnet,
daß der Schneidwalze ein Kalibrierabschnitt (34) nachgeschaltet ist.

11. Vorrichtung nach Anspruch 6,
dadurch gekennzeichnet,
daß im Einlaufbereich der Schneidwalzen (2,20)eine lösbare Vorschubeinrichtung (11-15) vorgesehen ist, die kinematisch mit der Drehbewegung der Schneidwalzen (2,20) koppelbar ist.

12. Vorrichtung nach Anspruch 6,
dadurch gekennzeichnet,
daß die Schneidwalzen aus einem Kernteil (21) mit eingearbeiteten Kühlkanälen (29) und einer darum angeordneten Hülse (30) mit dem Schneidprofil (3) bestehen und beide Teile (21,30) dicht und verdrehfest miteinander verbunden sind.

13. Vorrichtung nach Anspruch 12,
daß die Hülse (30) aus einem temperaturbeständigen Hartmetall besteht.

14. Vorrichtung nach einem der Ansprüche 6 bis 13,
dadurch gekennzeichnet,
daß die Schneidwalze (20) zur Profilierung der Ringe (16) im Grund (6) zwischen den Schneiden (3) eine Negativform (18) des angestrebten Profils aufweist, die von Null beginnend von Gang zu Gang kontinuierlich bis zu ihrer Endform zunimmt.

## Claims

1. Process for the continuous, chipless separation of individual, identical rings (4) from tubular workpieces (1) by means of three slitting rolls (2) with thread-shaped cutters which are driven in the same direction and which press onto the surface of the tubular workpiece and thereby roll around it, whereby the relative positions of rotation of the three slitting rolls (2) are so adjusted that the contact of the cutters on the workpiece being cut takes place in an exact common parting plane, and the diameter of the slitting rolls (2) increases from start to finish thereby forming an ever-narrowing channel whereby the tubular workpiece is rotated in a direction opposed to that of the slitting rolls and is advanced axially, characterised in that, after a centralising intake phase of the section to be cut from the tubular workpiece which when seen longitudinally is completely surrounded by the longitudinal contour of the slitting rolls without any break in the contact line between the workpiece (1) and the slitting rolls (2) during the entire separation process, and with the application of high perpendicular forces partly axial forces on the faces and partly radial forces on the surface area of the casing, rings are produced with parallel faces which are perpendicular to the axis of the workpiece, and before the separation process the tubular workpiece is heated to a temperature which results in a substantial reduction of the deformation resistance of the material employed, whereby a higher temperature is generated at the outer surface than at the inner surface of the tubular workpiece.

2. Process in accordance with Claim 1, characterised in that, to assist the introduction of the tubular workpiece (1) into the slitting roll arrangement, the tubular workpiece is subjected to a forcible forward thrust acting in the same direction whereby this force is kinematically coupled with the rotary movement of the cutting tool and operates for at least one slitting roll length.

3. Process in accordance with Claims 1 and 2, characterised in that, heating is carried out substantially by inductive means.

4. Process in accordance with Claims 1 to 3, characterised in that, the rings (4) are simultaneously profiled during the separation process.

5. Process in accordance with Claims 1 to 4, characterised in that, the tool is cooled internally during the separation and profiling processes and that the tool together with the workpiece to be separated are subjected to an external flow of combined cooling and lubricating fluid.

6. Device for carrying out the process in accordance with Claim 1 with three slitting rolls (2, 20) disposed around the tubular workpiece (1) to be processed wherein these slitting rolls are driven in the same direction and have thread-shaped cutters which when seen in longitudinal section are provided with flanks running substantially in a radial direction and the width of the cutters increases continuously from start to finish and the contour land (6) between the cutters of the slitting roll is substantially parallel to the axis of the rolls and each slitting roll exhibits a continuous increase in diameter from start to finish, characterised in that, the shafts of all three slitting rolls (2, 20) are arranged in the shape of an equilateral triangle around the work piece (1) to be cut and are positively coupled to one another, and the cutters (3) have a pointed shaped cutting nose (8) and a cutting foot (9) and flanks which are oriented substantially vertical to the respective axes of the rolls, and on the intake side there is provided an intake component (7, 10, 35) in the form of a funnel, and the contour lands (6) between the cutters (3) come into contact with the surface area of the tubular workpiece (1) at substantially equal spacing from the axis of the work piece (1) and a heating device (5) with temperature control is arranged on the intake side before the slitting roll assembly.

7. Device in accordance with Claim 6, characterised in that, the flanks at the foot (9) of the cutters are almost vertical to the respective axes of the rolls when the ratio of the diameter of the slitting roll (2, 20) to that of the tubular workpiece (1) is < 3:1 whilst at a ratio of ≥ 3:1 they are inclined outwards to the radial plane of the slitting rolls (2, 20) up to a maximum of ≤ 5°.

8. Device in accordance with Claim 6, characterised in that, the slitting roll (2, 20) has an intake component (7, 10).

9. Device in accordance with Claim 6, characterised in that, the slitting roll is preceded by a ring-shaped section (35) having a sliding bezel.

10. Device in accordance with Claim 6, characterised in that, the slitting roll is followed by a calibration section (34).

11. Device in accordance with Claim 6, characterised in that, in the intake region of the slitting rolls (2, 20) a detatchable forward-thrusting device (11-15) is provided which is kinematically coupled with the rotary movement of the slitting rolls (2, 20).

12. Device in accordance with Claim 6, characterised in that, the slitting rolls comprise a core component (21) with machined cooling channels (29) and fitting over it there is a sleeve (30) with the slitting profile (3), and both components (21, 30) are fixed securely to one another in a fashion resisting any relative rotation.

13. Device in accordance with Claim 12, characterised in that, the sleeve (30) consists of a temperature-resistant hard alloy.

14. Device in accordance with one of the Claims 6 to 13, characterised in that, in order to give a profile to the rings (16) the slitting rolls (20) exhibit the negative shape (18) of the desired profile in the land (6) between the cutters which is zero at the start and which continuously increases from channel to channel up to its final shape.

## Revendications

1. Procédé destiné au tronçonnement en continu, sans enlèvement de copeaux, de pièces tubulaires (1) pour l'obtention de bagues (4) identiques les unes aux autres, au moyen de trois cylindres de coupe (2) présentant des tranchants en forme de filets et entraînés dans le même sens et pressés sur la surface de la pièce tubulaire pour ainsi rouler sur elle, la position de rotation des trois cylindres de coupe (2) étant réglée entre eux de telle manière que le contact de coupe avec la pièce à tronçonner s'effectue dans un plan de coupe exactement commun, et le diamètre des cylindres de coupe (2) augmentant du début jusqu'à la fin pour ainsi former un passage allant en se rétrécissant, tandis que la pièce tubulaire est entraînée en rotation en sens inverse des cylindres de coupe et est avancée axialement,
caractérisé en ce que,
après une étape d'entrée avec centrage, la partie à sectionner de la pièce tubulaire est parfaitement entourée, selon une vue en coupe longitudinale, par le profil longitudinal des cylindres de coupe sans interruption de la ligne de contact entre pièce à usiner (1) et cylindres de coupe (2) pendant la totalité de l'opération de sectionnement, et en ce qu'elle est soumise à des forces normales élevées, d'une part à des forces axiales sur les faces et, d'autre part, à des forces radiales sur la surface latérale, des faces des bagues (4) étant produites à faces planes et parallèles et perpendiculairement à l'axe de la pièce, et en ce que, avant l'opération de sectionnement, la pièce tubulaire est chauffée à une température permettant de réduire sensiblement la résistance au façonnage du matériau utilisé, une température plus élevée étant obtenue au niveau de la surface extérieure de la pièce tubulaire qu'au niveau de sa face intérieure.

2. Procédé selon la revendication 1,
caractérisé en ce que
pour faciliter l'introduction de la pièce tubulaire (1) dans le groupe de cylindres de coupe, elle est soumise à une force d'avance agissant dans le même sens, cette force étant associée, sur le plan cinématique, au mouvement de rotation de l'outil de coupe et étant efficace sur au moins une longueur de cylindre de coupe.

3. Procédé selon les revendications 1 et 2,
caractérisé en que
le chauffage est effectué essentiellement par induction.

4. Procédé selon les revendications 1 à 3,
caractérisé en ce que,
pendant le tronçonnement, les bagues (4) sont également profilées.

5. Procédé selon les revendications 1 à 4,
caractérisé en ce que,
pendant le tronçonnement et le profilage, l'outil est refroidi depuis l'intérieur et en ce que l'outil ainsi que la pièce à tronçonner reçoivent, à partir de l'extérieur, un liquide combiné de refroidissement et de lubrification.

6. Dispositif destiné à la mise en oeuvre du procédé selon la revendication 1, comportant trois cylindres de coupe (2, 20) à tranchants en forme de filetage, entraînés dans le même sens de rotation et disposés autour de la pièce tubulaire à usiner (1), ces tranchants étant pourvus, selon une vue en coupe longitudinale, de flancs s'étendant sensiblement radialement, et leur largeur augmentant en continu depuis l'entrée jusqu'à la sortie, le fond de profil (6) entre les tranchants du cylindre de coupe étant sensiblement parallèle à l'axe du cylindre et chaque cylindre de coupe présentant une augmentation continue du diamètre, depuis le début jusqu'à la fin,
caractérisé en ce que
les arbres des trois cylindres de coupe (2, 20), disposés en forme de triangle équilatéral autour de la pièce à diviser (1), sont reliés entre eux par une liaison mécanique, et en ce que les tranchants (3) présentent un sommet de tranchant (8) en pointe et une base de tranchant (9) avec des flancs orientés sensiblement perpendiculairement par rapport à l'axe du cylindre correspondant, tandis qu'il est prévu, du côté entrée, un élément de guidage d'entrée (7, 10, 35) en forme d'entonnoir, et que le profil de fond (6) entre les tranchants (3) vient en appui contre la surface latérale de la pièce tubulaire (1), sensiblement de façon équidistante par rapport à l'axe de la pièce, et en ce qu'un dispositif de chauffage (5) à réglage de température est disposé, du côté entrée, avant le groupe de cylindres de coupe.

7. Dispositif selon la revendication 6,
caractérisé en ce que,
pour un rapport du diamètre du cylindre de coupe (2, 20) à celui de la pièce tubulaire (1) d'une valeur < 3, les flancs de la base de tranchant (9) sont presque perpendiculaires à l'axe du cylindre correspondant et en ce que, dans le cas d'un rapport ≥ 3, ils sont inclinés de seulement ≤ 5° vers l'extérieur par rapport au plan radial des cylindres de coupe (2, 20).

8. Dispositif selon la revendication 6,
caractérisé en ce que
le cylindre de coupe (2, 20) présente un élément de guidage d'entrée (7, 10).

9. Dispositif selon la revendication 6,
caractérisé en ce que,
avant le cylindre de coupe, il est prévu une partie annulaire (35) présentant un chanfrein de glissement.

10. Dispositif selon la revendication 6,
caractérisé en ce que,
après le cylindre de coupe, il est prévu une partie calibrage (34).

11. Dispositif selon la revendication 6,
caractérisé en ce que,
dans la zone d'entrée des cylindres de coupe (2, 20), il est prévu un dispositif mobile d'avance (11 à 15) qui peut être associé, sur le plan cinématique, au mouvement de rotation des cylindres de coupe (2, 20).

12. Dispositif selon la revendication 6,
caractérisé en ce que
les cylindres de coupe consistent en une partie interne (21), dans laquelle sont ménagés des canaux de refroidissement (29), et en une chemise (30) disposée autour et comportant le profil de coupe (3), les deux parties (21, 30) étant reliées l'une à l'autre de manière étanche et solidaire en rotation.

13. Dispositif selon la revendication 12,
caractérisé en ce que
la chemise (30) est faite en un métal dur résistant à chaud.

14. Dispositif selon l'une des revendications 6 à 13,
caractérisé en ce que
le cylindre de coupe (20) présente pour le profilage des bagues (16), dans le fond (6) entre les tranchants (3), une forme inverse (18) du profil désiré, cette forme augmentant en continu d'un pas à l'autre, en partant de zéro, jusqu'à la forme finale.
